# EUROPÄISCHE PATENTSCHRIFT

(11) **EP 1 177 258 B1**
(45) Veröffentlichungstag und Bekanntmachung des Hinweises auf die Patenterteilung: **02.07.2003**
(21) Anmeldenummer: 00967405.2
(22) Anmeldetag: 17.04.2000
(51) Int. Cl.: C09B 7/02, D06P 1/22, C09B 67/00

(54) **VERFAHREN ZUR HERSTELLUNG VON WÄSSRIG-ALKALISCHEN LÖSUNGEN REDUZIERTER INDIGOIDER FARBSTOFFE**
METHOD FOR PRODUCING AQUEOUS ALKALINE SOLUTIONS OR REDUCED INDIGOID DYES
PROCEDE DE PRODUCTION DE SOLUTIONS ALCALINO-AQUEUSES DE COLORANTS INDIGOIDES REDUITS

(30) Priorität: 29.04.1999 DE 19919746
(43) Veröffentlichungstag der Anmeldung: 06.02.2002
(73) Patentinhaber: DyStar Textilfarben GmbH & Co. Deutschland KG, 65926 Frankfurt am Main (DE)
(72) Erfinder: SCHROTT, Wolfgang, D-67459 Böhl-Iggelheim (DE); GRUND, Norbert, D-67063 Ludwigshafen (DE); MAIER, Peter, D-70197 Stuttgart (DE); SCHNITZER, Georg, D-90482 Nürnberg (DE); SÜTSCH, Franz, D-67127 Rödersheim-Gronau (DE); BECHTOLD, Thomas, A-6850 Dornbirn (AT); KRÜGER, Rudolf, D-67273 Weisenheim (DE)
(86) Internationale Anmeldenummer: EP0003468
(87) Internationale Veröffentlichungsnummer: WO00066663

(56) Entgegenhaltungen:
- WO-A-94/23114
- WO-A-95/07374
- DE-A- 4 320 867
- DE-A- 19 831 291
- FR-A- 769 353
- BASF Aktiengesellschaft, Ratgeber Cellulosefasern 8.77, Seiten 423-425.

## Beschreibung

Die vorliegende Erfindung betrifft ein Verfahren zur Herstellung von 5 bis 60 gew.-%igen wäßrig-alkalischen Lösungen reduzierter indigoider Farbstoffe.

Indigoide Farbstoffe, vor allem Indigo selbst und seine Bromderivate wie Brillantindigo, stellen seit langer Zeit bekannte Küpenfarbstoffe dar, die zum Färben von cellulosehaltigem Textilmaterial eingesetzt werden. So hat der unsubstituierte Indigo besondere Bedeutung für die Färbung von Baumwoll-Kettgarnen für Blue-Denim-Artikel.

Zum Färben muß der wasserunlösliche Farbstoff zunächst durch Reduktion (Verküpen) in die wasserlösliche faseraffine Leukoform überführt werden, die dann nach dem Aufziehen auf das zu färbende Material wieder zum wasserunlöslichen Küpenfarbstoff-Pigment oxidiert wird.

Bei den herkömmlichen Indigofärbeverfahren erfolgt die Reduktion des Indigos in einem dem Färbebad vorgelagerten Behälter in alkalischem Medium unter Verwendung von Natriumdithionit (Hydrosulfit) als Reduktionsmittel. Auf diese Weise werden, wie im Ratgeber Cellulosefasern der BASF AG, S.425 beschrieben, üblicherweise 8 gew.-%ige Leukoindigolösungen hergestellt, und das Färbereiabwasser wird mit großen Mengen Sulfat und Sulfit belastet.

Um diese Nachteile zu vermeiden, wurde ein Färbeverfahren entwickelt, bei dem durch katalytische Hydrierung erzeugter Leukoindigo eingesetzt wird (WO-A-94/23114). Wie in der älteren deutschen Patentanmeldung 198 31 291.1 beschrieben, können basierend auf katalytischer Hydrierung unter Ergreifung bestimmter Verfahrensmaßnahmen auch Leukoindigolösungen mit einem Leukoindigogehalt von bis zu 55 Gew.-% hergestellt werden.

Außerdem ist aus den WO-A-90/15182, 95/07374 und 96/32445 die elektrochemische Reduktion von Indigo in Gegenwart großer Mengen eines Mediators (um 4,5 Gew.-% Eisen, bezogen auf die Indigomenge) in sehr verdünnter Lösung (bis 0,5 gew.-%ig) bekannt.

Der Erfindung lag die Aufgabe zugrunde, konzentriertere Lösungen von indigoiden Farbstoffen bereitzustellen, die vorteilhaft zum Färben eingesetzt werden können.

Demgemäß wurde ein Verfahren zur Herstellung von 5 bis 60 gew.-%igen wäßrig-alkalischen Lösungen reduzierter indigoider Farbstoffe gefunden, welches dadurch gekennzeichnet ist, daß man den indigoiden Farbstoff elektrochemisch in Gegenwart eines Mediators reduziert, wobei man beim erfindungsgemäßen Verfahren nicht die Gesamtmenge des zu reduzierenden Farbstoffs, sondern nur einen Teil in der Elektrolysezelle vorgibt und den Rest während der Reduktion portionsweise (in Pulver- oder Teigform) zu gibt.

Als Mediator eignen sich dabei alle für die elektrochemische Farbstoffreduktion bekannten Redoxsysteme.

Als Beispiele seien Mediatoren auf Basis von chinoiden Verbindungen wie Anthrachinonsulfonsäuren und Hydroxyanthrachinonen, z.B. 1,2-Dihydroxy-9,10-anthrachinon, von Chinoniminen und Diiminen sowie Mediatoren auf Basis von Übergangsmetallkomplexsalzen genannt.

In der Gruppe der Übergangsmetallkomplexsalze kommt den Eisen(II/III)komplexsalzen besondere Bedeutung zu.

Als Beispiele für besonders geeignete Komplexbildner seien neben Triethanolamin, Triisopropanolamin und Bicin die in der DE-A-43 20 867 beschriebenen aliphatischen Hydroxyverbindungen genannt, die mindestens zwei koordinationsfähige Hydroxylgruppen enthalten und zusätzlich bis zu zwei Aldehyd-, Keto- und/oder Carboxylgruppen aufweisen können, wobei sich von Zuckern ableitende Verbindungen von besonderem Interesse sind. Im einzelnen seien als bevorzugte Beispiele genannt:
- Di- und Polyalkohole wie Ethylenglykol, Diethylenglykol, Pentaerythrit, 2,5-Dihydroxy-1,4-dioxan, vor allem Zuckeralkohole wie Glycerin, Erythrit, Hexite wie Mannit, Dulcit, Sorbit und Galactit;
- Di- und Polyhydroxyaldehyde wie Glycerinaldehyd, Trioseredukton, vor allem Zucker (Aldosen) wie Mannose, Galactose und Glucose;
- Di- und Polyhydroxyketone wie vor allem Zucker (Ketosen) wie Fructose;
- Di- und Polysaccharide wie Saccharose, Maltose, Lactose, Cellubiose und Melasse;
- Di- und Polyhydroxymonocarbonsäuren wie Glycerinsäure, vor allem von Zuckern abgeleitete Säuren wie Gluconsäure, Heptagluconsäure, Galactonsäure und Ascorbinsäure;
- Di- und Polyhydroxydicarbonsäuren wie Äpfelsäure, vor allem Zuckersäuren wie Glucarsäuren, Mannarsäuren und Galactarsäure;
- Trihydroxycarbonsäure wie Citronensäure.

Besonders bevorzugt sind hierbei die von Zuckern abgeleiteten Monocarbonsäuren (insbesondere Gluconsäure und vor allem Heptagluconsäure) sowie deren Ester, Lactone und Salze.

Das Molverhältnis zwischen Komplexbildner und Eisenkation beträgt bei den Eisen(II/III)/Triethanolamin-Komplexen üblicherweise 15 : 1 bis 5 : 1 und bei den Komplexen mit den in den in der DE-A-43 20 867 beschriebenen Komplexbildnern, insbesondere Heptagluconsäure, in der Regel 3 : 1 bis 0,5 : 1, insbesondere 1,5 : 1 bis 0,5 : 1.

Die Eisen(II/III)komplexsalze können durch Mischen von Eisen(II)-oder -(III)salzen wie Eisensulfat, Eisenacetat oder bevorzugt Eisenchlorid, mit dem Komplexbildner oder einem seiner Salze in Gegenwart von Wasser hergestellt werden. Dabei können die Ausgangsverbindungen als Feststoff oder als wäßrige Lösung eingesetzt werden. Verwendet man ein Eisen(III)salz, so wird das Eisen(III) zu Beginn der Elektrolyse zum wirksamen Eisen(II)komplex reduziert.

Vorzugsweise kommt der Mediator beim erfindungsgemäßen Verfahren in Form einer alkalischen Lösung (etwa 5 bis 8 gew.-%ig) zum Einsatz.

Überraschenderweise reicht beim erfindungsgemäßen Verfahren im Vergleich zu den bereits beschriebenen Verfahren zur elektrochemischen Farbstoffreduktion eine deutlich geringere Menge an Mediator für die Reduktion des indigoiden Farbstoffs aus. So werden, bezogen auf einen Mediator, der ein Elektron pro Molekül überträgt, üblicherweise 0,003 bis 0,08 mol, bevorzugt 0,008 bis 0,05 mol, Mediator je mol Farbstoff eingesetzt.

Diese geringe Menge an Mediator beeinflußt die Löslichkeit des reduzierten Farbstoffs kaum. Der Mediator muß daher nicht aus der fertigen Leukofarbstofflösung entfernt werden.

Vorteilhaft legt man beim erfindungsgemäßen Verfahren nicht die Gesamtmenge des zu reduzierenden Farbstoffs, sondern nur einen Teil in der Elektrolysezelle vor und gibt den Rest während der Reduktion portionsweise (in Pulver- oder Teigform) zu. Man kann jedoch auch erst nach Einschalten des Stroms mit der Farbstoffzugabe beginnen. Auf diese Weise können auch hochkonzentrierte Leukofarbstofflösungen (insbesondere > 20 gew.-%ige Leukoindigolösungen) problemlos hergestellt werden, was mit Reduktionsmitteln wie Hydrosulfit oder durch Hydrierung nicht möglich ist.

Aus Viskositätsgründen ist es dabei besonders günstig, wenn die Konzentration an unverküptem Farbstoff im Elektrolysebad 25 Gew.-%, insbesondere 20 Gew.-%, nicht übersteigt.

Werden Kathoden aus Kohle- oder Graphitfilz, die eine besonders hohe Stromausbeute ermöglichen, eingesetzt, so empfiehlt es sich, den Feststoffgehalt des Elektrolysebades weiter zu verringern und möglichst niedrig zu halten, um ein Zusetzen oder eine mechanische Schädigung des Elektrodenmaterials zu verhindern.

Der reduzierte Farbstoff ist in wäßrig-alkalischem Medium als Leukosalz löslich. Bis zu 20 gew.-%ige Leukoindigolösungen sind bei Anwesenheit eines Alkalimetallhydroxids als Alkali stabil. Bei Temperaturerhöhung bis auf 80°C gilt dies auch für bis zu 40 gew.-%ige Lösungen.

Um den reduzierten Farbstoff in höherer Konzentration (in der Regel > 20 Gew.-%) auch bei Raumtemperatur stabil in Lösung zu halten, empfiehlt es sich, ihn in ein gemischtes Alkalimetallsalz zu überführen. Dementsprechend setzt man in höherkonzentrierten Lösungen als Alkali vorzugsweise ein Gemisch mindestens zweier Alkalimetallhydroxide ein, in welchem der Anteil keines der Alkalimetallhydroxide mehr als 70 mol-% beträgt.

Bevorzugte Alkalimetallhydroxide sind dabei Lithiumhydroxid, Natriumhydroxid und Kaliumhydroxid, die als Dreiergemisch oder in Form der jeweiligen Zweierkombinationen verwendet werden können, wobei Gemische von Natriumhydroxid und Kaliumhydroxid besonders bevorzugt sind.

Wird ein Gemisch zweier Alkalimetallhydroxide eingesetzt, so beträgt deren Molverhältnis bevorzugt 2 : 1 bis 1 : 2, besonders bevorzugt 1,5 : 1 bis 1 : 1,5, ganz besonders bevorzugt etwa 1 : 1.

Weiterhin ist es empfehlenswert, den Elektrolytüberschuß so gering wie möglich zu halten, um ein Aussalzen des gelösten Leukofarbstoffs zu verhindern.

Daher setzt man das Alkali, insbesondere das Alkalihydroxidgemisch, in der Regel in Mengen von 1,2 bis 2 mol, vorzugsweise 1,4 bis 1,8 mol, insbesondere um 1,5 mol, je mol Leukofarbstoff ein.

Das erfindungsgemäße Verfahren wird üblicherweise bei 10 bis 80°C vorgenommen. Durch die Wahl höherer Temperaturen (>40°C) wird nicht nur die Reduktionsgeschwindigkeit, sondern auch die Löslichkeit des reduzierten Farbstoffs erhöht. So können bei Einsatz eines Alkalimetallhydroxidgemischs und Vermeidung eines Elektrolytüberschusses bei etwa 40 bis 60°C 50 bis 55 gew.-%ige und bei 60 bis 80°C 55 bis 60 gew.-%ige Leukoindigolösungen erhalten werden, die keine Neigung zur Auskristallisation zeigen.

Für die Durchführung des erfindungsgemäßen Verfahrens können die aus den WO-A-90/15182, 95/07374 und 96/32445 bekannten Elektrolysezellen verwendet werden.

Das erfindungsgemäße Verfahren ist zur Herstellung konzentrierter Leukosalzlösungen sämtlicher indigoider Farbstoffe, z.B. von Indigo selbst, Mono-, Di-, Tri- und Tetrabrom- und/oder - chlorindigo und Thioindigo und seinen Derivaten geeignet.

Bevorzugt wird das erfindungsgemäße Verfahren für die Herstellung 15 bis 45 gew.-%iger, vor allem 20 bis 30 gew.-%iger Leukofarbstofflösungen eingesetzt, wobei die entsprechenden Leukoindigolösungen von besonderem Interesse sind.

Die erfindungsgemäß erhaltenen Leukofarbstofflösungen können in den Indigofärbeanlagen vorteilhaft für alle Färbeverfahren (z.B. Garnfärberei, Ausziehfärberei, Garment-Färberei) eingesetzt werden.

### Beispiel

Zur Herstellung einer 20 gew.-%igen Lösung reduzierten Indigos wurde die in der WO-A-96/32445 beschriebene durch eine Nafion® Membran geteilte Elektrolysezelle mit Anoden- und Kathodenkreislauf verwendet. Die Anode (200 mm x 100 mm x 3 mm, planare Fläche 2 dm²) bestand aus RA₄ 1,457 (Edelstahl). Die Kathode (identische Abmessungen) bestand aus einem Kohlefilz. Zur Messung des Kathodenpotentials mittels eines Voltmeters war eine Ag/AgCl-Referenzelektrode installiert. Die Messung des Potentials in Lösung erfolgte über eine Pt-Meßelektrode.

Aus den folgenden Komponenten wurde 1 1 Mediatorlösung hergestellt:

| | |
|---|---|
| 53,6 g | (0,33 mol) Eisen (III) chlorid |
| 89 g | (0,36 mol) Natriumheptagluconat |
| 786 g | (786 ml) destilliertes Wasser |
| 53 g | (35 ml) 50 gew.-%ige Natronlauge |
| 73 g | (49 ml) 50 gew.-%ige Kalilauge |

Dabei wurde wie folgt vorgegangen: Eisen(III)chlorid und Natriumheptagluconat wurden in Wasser eingerührt. Bereits während des Lösens der Salze wurde soviel Lauge zugegeben, daß der pH-Wert der Lösung zwischen 3 und 5 gehalten wurde. Nach vollständiger Lösung wurde die restliche Lauge portionsweise zugegeben. Der pH-Wert der fertig angesetzten Lösung betrug 10,6.

Zur Durchführung der Reduktion wurden in den Kathoden- und Anodenraum der Elektrolysezelle jeweils

| | |
|---|---|
| 924 ml | destilliertes Wasser |
| 50 ml | der Mediatorlösung |
| 90 ml | 50 gew.-%ige Natronlauge |
| 126 ml | 50 gew.-%ige Kalilauge |

gegeben. In den Kathodenraum wurden außerdem über einen Zeitraum von 11 h und 40 min alle 10 min 4,3 g Indigopulver bei einem konstanten Elektrolysestrom von 6 A gegeben.

Nach Reduktion des Indigos zeigte das Voltmeter ein Potential von - 850 mV an.

Es wurden 1,5 kg einer 20 gew.-%igen wäßrigen Leukoindigolösung mit einer Dichte von 1,12 g/ml erhalten. Die Stromausbeute betrug 88 %.

## Patentansprüche

1. Verfahren zur Herstellung von 5 bis 60 gew.-%igen wäßrig-alkalischen Lösungen reduzierter indigoider Farbstoffe, **dadurch gekennzeichnet, daß** man den indigoiden Farbstoff elektrochemisch in Gegenwart eines Mediators reduziert, wobei man nicht den gesamten zu reduzierenden Farbstoff vorlegt, sondern den Farbstoff portionsweise zugibt.

2. Verfahren nach Anspruch 1, **dadurch gekennzeichnet, daß** man als Mediator ein Eisen(II/III)komplexsalz einsetzt.

3. Verfahren nach Anspruch 1 oder 2, **dadurch gekennzeichnet, daß** man, bezogen auf einen Mediator, der ein Elektron pro Molekül überträgt, 0,003 bis 0,08 mol Mediator je mol Farbstoff einsetzt.

4. Verfahren nach den Ansprüchen 1 bis 3, **dadurch gekennzeichnet, daß** man als Alkali ein Gemisch mindestens zweier Alkalimetallhydroxide einsetzt, in welchem der Anteil keines der Alkalimetallhydroxide mehr als 70 mol-% beträgt.

5. Verfahren nach den Ansprüchen 1 bis 4, **dadurch gekennzeichnet, daß** man 1,2 bis 2 mol Alkali je mol Farbstoff einsetzt.

6. Verfahren nach den Ansprüchen 1 bis 5, **dadurch gekennzeichnet, daß** man die Reduktion bei 10 bis 80°C vornimmt.

7. Verfahren nach den Ansprüchen 1 bis 6, **dadurch gekennzeichnet, daß** man es zur Herstellung 15 bis 45 gew.-%iger Leukoindigolösungen anwendet.

## Claims

1. A process for preparing a from 5 to 60% by weight aqueous alkaline solution of a reduced indigoid dye, which comprises reducing said indigoid dye electrochemically in the presence of a mediator, where the dye to be reduced is not precharged all at once, but is added a little at a time.

2. A process as claimed in claim 1, wherein said mediator is an iron(II/III) complex salt.

3. A process as claimed in claim 1 or 2, wherein, based on a mediator which transfers one electron per molecule, from 0.003 to 0.08 mol of mediator is used per mole of dye.

4. A process as claimed in any of claims 1 to 3, wherein the alkali used is a mixture of at least two alkali metal hydroxides wherein none of the alkali metal hydroxides accounts for more than 70 mol%.

5. A process as claimed in any of claims 1 to 4, wherein from 1.2 to 2 mol of alkali are used per mole of dye.

6. A process as claimed in any of claims 1 to 5, wherein said reducing is effected at from 10 to 80°C.

7. A process as claimed in any of claims 1 to 6 for preparing a from 15 to 45% strength by weight leuco indigo solution.

## Revendications

1. Procédé de préparation de solutions aqueuses-alcalines à 5 - 60 % en poids de colorants indigoïdes réduits, **caractérisé en ce que** le colorant indigoïde est réduit par voie électrochimique en présence d'un médiateur, en n'introduisant pas initialement la totalité du colorant à réduire, mais en ajoutant le colorant par portions.

2. Procédé selon la revendication 1, **caractérisé en ce que** l'on utilise un sel complexe de fer (II/III) en tant que médiateur.

3. Procédé selon la revendication 1 ou 2, **caractérisé en ce que** l'on utilise de 0,003 à 0,08 mol de médiateur par mole de colorant, par rapport à un médiateur qui transfère un électron par molécule.

4. Procédé selon les revendications 1 à 3, **caractérisé en ce que** l'on utilise, en tant qu'alcali, un mélange d'au moins deux hydroxydes de métaux alcalins, dans lequel la proportion d'aucun des hydroxydes de métaux alcalins n'est supérieure à 70 % en moles.

5. Procédé selon les revendications 1 à 4, **caractérisé en ce que** l'on utilise de 1,2 à 2 mol d'alcali par mole de colorant.

6. Procédé selon les revendications 1 à 5, **caractérisé en ce que** la réduction est effectuée entre 10 et 80°C.

7. Procédé selon les revendications 1 à 6, **caractérisé en ce qu'**il est employé pour la préparation de solutions indigo leuco à 15 - 45 % en poids.
